Europäisches Patentamt

European Patent Office

Office européen des brevets

(11) Publication number: **0 270 344**
**A2**

# (12) EUROPEAN PATENT APPLICATION

(21) Application number: **87310578.7**

(22) Date of filing: **01.12.87**

(51) Int. Cl.⁴: **F 16 C 33/62**

(30) Priority: **02.12.86 US 936853**

(43) Date of publication of application:
**08.06.88 Bulletin 88/23**

(84) Designated Contracting States: **DE FR GB IT SE**

(71) Applicant: **THE GARRETT CORPORATION**
**9851-9951 Sepulveda Boulevard P.O. Box 92248**
**Los Angeles, California 90009 (US)**

(72) Inventor: **Gilbert, Robert Bruce**
**11639 South Warcloud Court**
**Phoenix Arizona 85044 (US)**

(74) Representative: **Rees, David Christopher et al**
**Kilburn & Strode 30 John Street**
**London WC1N 2DD (GB)**

(54) **High speed marginally lubricated ball bearing.**

(57) A high speed ball bearing (10) comprising an inner annular race (20) having an outer annular ball race groove (26), an outer annular race (12) spaced radially from the inner race (20) and having an inner annular ball race groove (14) confronting the outer groove (26) on the inner race and an annular separator (28) located between the inner and outer races (20,12). The separator has a series of circumferentially spaced apertures (36) and a series of balls (38) is captively located between the inner and outer races (20,12), within the outer and inner grooves (26,14) and within the apertures (36) in the separator (28). The inner and outer races (20,12) are made of bearing quality steel, the balls (38) are made of a ceramic material and the separator (28) is made of a material which includes a selected amount of a solid lubricant.

FIG 2

EP 0 270 344 A2

## Description

### HIGH SPEED MARGINALLY LUBRICATED BALL BEARING

The present invention relates to ball bearings for high speed applications in which only marginal, as opposed to flooded, lubricating and cooling fluid flow is provided to the bearing. The bearing is an antifriction bearing having an annular inner and outer raceway between which the balls and an annular separator are located.

Ball bearings having steel races and steel balls and being capable of sustaining both radial and axial (thrust) loads under conditions of high speed operation are known. These bearings must be provided with an adequate flow of lubricating and cooling liquid. This lubricating flow is provided either by flooding the bearing with oil, or by providing a marginally lubricating oil mist carried in an air stream.

Also known are ball bearings for use at indeterminate speeds having steel inner and outer races and non-metallic balls. These bearings may employ ball elements made of a gem stone or a mineral. Such a teaching is set forth in United States Patent 1,332,176 (Heindlhofer). Alternatively, these bearings may employ ball elements of a ceramic material or a glass material. A ball bearing having ceramic ball elements for low speed operation is described in United States Patent 2,158,156, (Schroder). Bearings having steel races and steel or ceramic ball elements have been employed for moderately high speed operation with oil flooding or marginal oil mist lubrication in an air flow.

However, in selected aerospace turbine engine applications it is desirable to employ the jet fuel of the engine as the lubricant and coolant in the engine bearings. Unfortunately, when compared with oil, jet fuel is not a good lubricant. Ball bearings of know construction have been employed with steel balls which have been flooded or marginally lubricated by JP-4 jet fuel with moderate success up to a DN number of about $5 \times 10^5$. Those skilled in the bearing art will recognise the DN number as being the product of bearing inner race bore diameter in millimetres and rotational speed during use in rotations per minute (RPM). However, when operated with other fuels such as JP-5, these same bearings have failed under the same operating conditions. JP-4 fuel is recognised as containing trace elements such a sulphur and nitrogen compounds which are not present to the same extent in JP-5 fuel, and which are thought to act as lubricants.

Teachings of the bearing art which may be considered relevant to the invention are found in the following US patents, two of which have previously been referred to.

| PATENT NUMBER | ISSUED | PATENTEE |
|---|---|---|
| 1,332,176 | 2/24/20 | Heindlhofer |
| 2,158,165 | 5/6/39 | Schroder |
| 3,027,626 | 4/3/62 | Murphy |
| 3,097,897 | 7/16/63 | Taylor |
| 3,212,834 | 10/19/65 | Mayer et al |
| 3,472,567 | 10/14/69 | Johnson |
| 3,567,504 | 3/2/71 | Hopkins et al |
| 3,832,023 | 8/27/74 | Fairbank |
| 4,040,687 | 8/9/77 | Rogers |
| 4,397,507 | 8/9/83 | Kraus et al |
| 4,541,786 | 9/17/85 | McLean |

Accordingly, conventional thinking in the bearing art has until now held that a ball bearing having steel inner and outer races and steel or ceramic ball elements could not be operated at DN numbers above $5 \times 10^5$ when lubricated by jet fuel. The demands of advancing technology in the aerospace turbine engine field call for ball thrust bearings capable of operating at DN numbers above $5 \times 10^5$ and desirably for very high speed operation in the DN number range of $1 \times 10^6$ to $2 \times 10^6$, or higher. The operating speed range is, of course, well beyond the known operating limits for lubrication of a ball bearing with jet fuel.

In the course of seeking a solution to these objects, the present Applicants' tested known bearing constructions. All conventional bearings tested failed to meet the objectives of the present invention, which was expected in view of the state of the bearing art. For example, a ball thrust bearing having steel inner and outer races, with steel ball elements, and a silver plated steel separator failed after just a few seconds of operation at 37,000 RPM while marginally lubricated with a mist of JP-10 jet fuel in an air stream. This bearing had an inner diameter of 45mm., so that the DN number was $1.67 \times 10^6$.

Therefore it is an object of this invention to provide a ball thrust bearing capable of sustaining operation at high speed above a DN number of $5 \times 10^5$ while lubricated by jet fuel.

A further object of the invention is to provide a bearing capable of sustained operation at very high speed in the DN number range from $1 \times 10^6$ to $2 \times 10^6$, or higher, while lubricated by jet fuel.

Also another object of the invention is to provide a bearing capable of operation up to a DN number of about $1.7 \times 10^6$ while marginally lubricated only by jet fuel mist in an air stream.

Still further, an object is to provide a bearing capable of operation at a DN of $1.7 \times 10^6$ while marginally lubricated by a jet fuel such as JP-4, JP-5 or JP-10.

According to one aspect of the invention, there is provided a high speed ball bearing comprising; an inner annular race having an outer annular ball race groove; an outer annular race spaced radially from the inner race and having an inner annular ball race groove confronting the outer groove on the inner race; an annular separator located between the inner and outer races, the separator having a series of circumferentially spaced apertures; and a series of balls captively located between the inner and outer races, within the outer and inner grooves and within the apertures in the separator; characterised in that the inner and outer races are made of bearing quality steel, the balls are made of a ceramic material and the separator is made of a material which includes a selected amount of a solid lubricant.

Such a bearing has been found to be operable at DN numbers above $5 \times 10^5$ while only marginally lubricated in operation by liquid jet engine fuel.

The invention may therefore provide a very high speed ball thrust bearing for operation in the range of DN numbers from $5 \times 10^5$ and above, where D is the bore diameter of the bearing in millimetres and N is the design operating speed of the bearing in rotations per minute, while the bearing is only marginally lubricated in operation by liquid jet engine fuel, the bearing comprising; an inner annular ball race member, and an outer annular ball race member spaced radially outwardly from the inner ball race member, each ball race member having a respective annular ball race groove confronting the other ball race member, and each ball race member being made of bearing quality steel; a plurality of ceramic ball members captively located in the ball race grooves radially between and spacing apart the ball race members and in rolling contact with both to provide low-friction relative rotation thereof; an annular separator member interposed radially between the ball race members and defining a matching plurality of circumferentially spaced apart ball-receiving openings therethrough, each of the ball-receiving openings receiving a respective one of the plurality of ball members, the separator member comprising a selected weight percent of solid lubricant therein.

Preferably, the ceramic balls are of solid silicon nitride. Preferably, the solid lubricant is carbon graphite. Preferably the separator is of polyimide polymer, for example Vespel SP-21 (sold by E.I DuPont de Nemours).

The applicant has discovered that a ball thrust bearing according to the invention having steel inner and outer races, with silicon nitride ceramic balls, and a Vespel polyimide SP-21 separator member will surprisingly operate completely successfully at a DN number of above $5 \times 10^5$ while only marginally lubricated with any one of the previously identified jet fuels, Vespel polyimide SP-21 is a product of E.I. Dupont de Nemours.

Preferably, the separator and the outer race each define an axially spaced apart pair of engageable surfaces which confronts in a radially spaced relationship, the confronting surfaces being relatively rotational and engageable with one another upon gyration of the separator. More preferably, the engageable pair of surfaces on the outer race are cylindrical surfaces which are axially spaced apart on opposite sides of the ball race groove, and the engageable surfaces on the separator are a similarly axially spaced apart radially extending pair of annular protrusions defining an annular groove therebetween, the pair of protrusions each defining the radially outwardly facing engageable surface.

Conveniently, the radially inner ball race member comprises a mirror image pair of annular members which cooperate to define the respective ball race groove.

The invention also extends to a method of operating a bearing as defined above characterised by operating the bearing at a speed at which the DN number is above $5 \times 10^5$ and by providing a marginally lubricating mist of liquid jet engine fuel in a transporting air stream directed onto the bearing. The liquid jet fuel may be JP-4, JP-5 or JP-10.

Thus, the invention may be considered to extend to a method of making and operating a very high speed ball bearing for operation in the range of DN numbers from $5 \times 10^5$ to 1.7 to $10^6$ and higher while only marginally lubricated in operation by a mist of liquid jet engine fuel carried in a transport air stream, the method comprising the steps of:providing both an annular radially inner and annular radially outer ball race member, defining on each ball race member a cooperable annular ball race groove confronting the other the ball race member, fabricating each ball race member from bearing quality steel; interposing radially between the ball race members a plurality of ball elements in ball race grooves and in rolling contact with both ball race members to provide low friction relative rotation thereof, making the plurality of ball elements each of solid ceramic material; interposting radially between the ball race members an annular separator member, defining in the separator member a matching plurality of circumferentially spaced apart openings radially extending therethrough, disposing in each one of the openings, one of the ball elements to circumferentially space them apart, making separator member of inherently lubricious material; operating the ball bearing at a speed at which the DN number is in the range from $5 \times 10^5$ to $1.7 \times 10^6$ or higher; while operating the ball bearing, providing a marginally lubricating mist of liquid jet engine fuel in a transporting air stream directed upon the bearing.

The invention may also be considered to extend to ball bearing apparatus for very high speed operation comprising: an annular radially inner ball race member of bearing quality steel and defining a radially outwardly disposed first ball race groove; an annular radially outer ball race member of bearing quality steel and defining a radially inwardly disposed second ball race groove radially outwardly of and confronting in radially spaced relation the first ball race groove; a plurality of ball members interposed radially between the inner outer ball race members, the ball members each being of solid ceramic material; means for circumferentially spacing apart the plurality of ball elements and providing lubricity therewith and with the ball race members, the spacing means including an annular one-piece separator member of polymer material having solid lubricant therein and defining a matching plurality of radially extending openings therethrough, each one of the openings receiving a respective one of the ball elements; means for providing additional lubrication and cooling to the ball bearing in operation, the lubrication and cooling means providing a mist of liquid jet engine fuel in the transport air stream directed upon the ball bearing; and means for operating the ball bearing at a DN number in the range from $5 \times 10^5$ to $1.7 \times 10^6$ or higher, where D is the inner diameter of radially inner ball race member in millimetres, and N is the relative rotational speed between the balls race members in the rotations per minute.

An unexpected result of the present invention has been completely successful operation by the Applicant of bearings according to the invention at a DN number of $1.67 \times 10^6$ while only marginally lubricated by JP-4, JP-5, or JP-10 liquid mist in an air stream. Still more surprisingly, bearings according to the invention have been operated while lubricated as described above from zero speed at -65°F, with a rapid spin up to 37,000 RPM in as little as six seconds so that the bearing is subjected to full operating speed while very cold. Thereafter the bearing warms to operating temperature expected within a turbine engine and continues operation for a set time. Such use stimulates a high-altitude cold start of a turbine engine and is recognised as being very severe on the bearing because of the dimensional changes which occur while the bearing is increasing in temperature at high or very high operating speeds. The rapid spin up while at low temperature did not cause any internal damage to the bearings tested which might have shortened their service life.

The invention may be carried into practice in various ways and one embodiment will now be described by way of example with reference to the accompanying drawings, in which:-

Figure 1 is a side view partly in section of a ball bearing in accordance with the invention; and

Figure 2 is a section taken along line 2-2 in Figure 1.

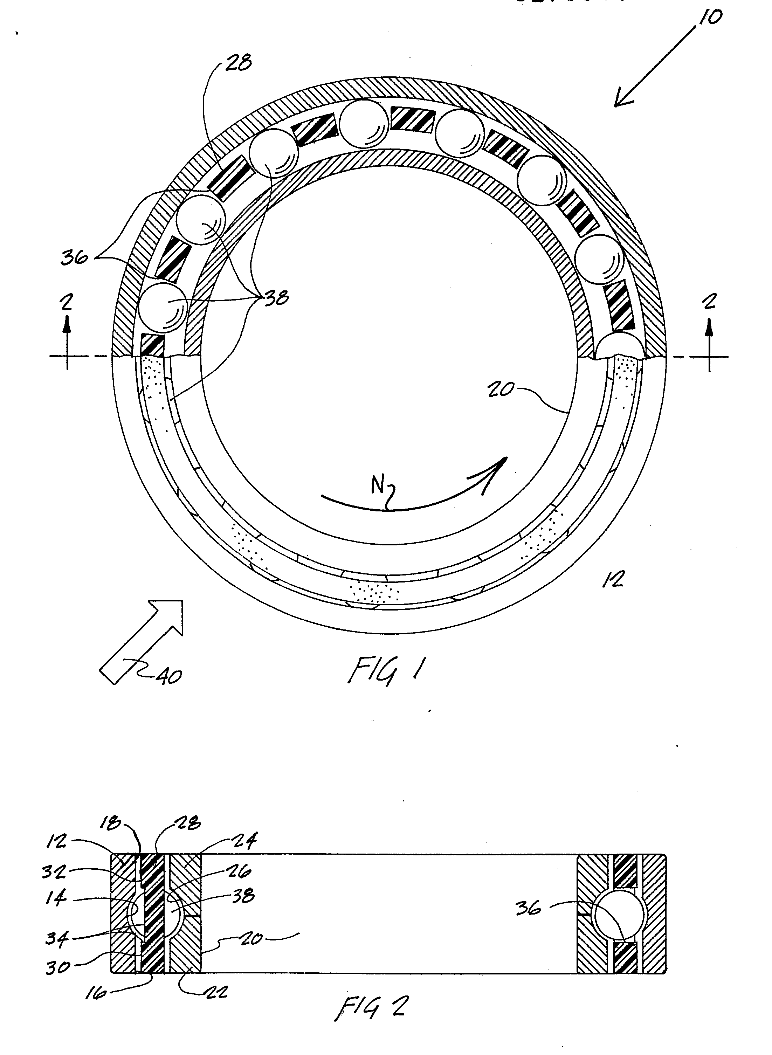

Figures 1 and 2 show a bearing 10 according to the present invention. The bearing 10 includes an outer annular race member 12 constructed of conventional bearing quality steel alloy and having a radially inwardly facing arcuate bearing race groove 14 disposed between axially spaced apart cylindrical surfaces 16,18. A two-piece, inner annular race member 20 is located within the outer race member 12. he inner race member 20 is also constructed of bearing quality steel and comprises two substantially mirror image sections 22, 24 which together define a radially outwardly facing bearing race groove 26 which confronts the groove in the outer race.

A single-piece annular separator member 28 is located between the inner race member 20 and outer race member 12. The separator member defines a pair of axially spaced apart radially outwardly disposed rubbing surfaces 30,32 which lie on opposite sides of a shallow groove 34, and which face the surfaces 16,18 of the outer race member 12. The separator member 28 also defines a plurality of circumferentially spaced cylindrical openings or bores 36 extending radially through the separator member 28. The separator member 28 is made from DuPont Vespel SP-21 which is a polyimide polymer loaded homogeneously with about 20% carbon graphite solid lubricant. Consequently, it will be seen that the separator member 28 assists in the lubrication of the bearing 10. Also, it should be noted that while the rubbing surfaces 30,32 of the separator member 28 face and may, due to gyration of the separator member 28, actually contact the surfaces 16,18 of outer race member 12, these surfaces are desirably spaced apart to define a radial clearance. A plurality of ball rolling elements 38 are received in the openings 36 and the grooves 14,34 of the bearing 10. The balls 38 make rolling contact with both the inner race member 20 and the outer race member 12 to allow low-friction relative rotation between them (arrow N, in Figure 1). Since the grooves 14 and 34 are both relatively deep in relation to the diameter of the balls 38, the bearing 10 is able to sustain a considerable axial (thrust) load in addition to radial loads. The balls 38 are made of solid silicon nitride ceramic. The balls 38 as well as surfaces of the grooves 14, 34 are ground to a smooth surface finish as is conventional in the bearing art.

During operation of the bearing 10 at DN of $5 \times 10^5$ or higher, a lubricating and cooling mist of jet fuel is provided in a stream of air, depicted by arrow 40 in Figure 1. The stream of air serves to transport the jet fuel mist and is not, the Applicants believe, essential to the successful operation of the bearing 10 at very high speeds. As has been mentioned, the jet fuel mist cannot be considered a very effective lubricant. However, the jet fuel by its heat of vaporisation, is believed to cool the bearing 10 and thus prevent generation of excessively high temperatures. The Applicants also believe the separator member 28 to be important to be successful operation of the bearing 10 at the very high speeds contemplated by the present invention. In other words, the Vespel SP-21 of which the separator member 28 is made has been found to be very lubricious, or to possess a very low coefficient of friction, in combination with both the steel inner and outer races 12,20, and the silicone nitride balls 38. Consequently, an overall low coefficient o friction is achieved between all of the component parts of the bearing 10.

As mentioned before, testing of the bearings according to the present invention has varified the surprising and unexpected result of the presently disclosed combination of construction materials. bearings according to the present invention have been operated at DN numbers well above $5 \times 10^5$ and as high as about $1.7 \times 10^6$ with only marginal jet fuel mist lubrication as described with completely satisfactory results. Further, any of the jet fuels JP-4, JP-5 or JP-10 may be used to lubricate the bearing of the present invention. On the other hand, operation of the best conventional bearings at DN numbers of 1.7 C $10^6$ and the same lubrication conditions results in utter failure of the bearings in very short time.

Several modifications to the invention may be made. For example, the applicant has disclosed the use of DuPont Vespel polyimide SP-21 as a material construction for the separator member 28. However, other materials having sufficient mechanical strength, compatibility with jet engine fuels, and lubricity may also suffice to space the balls 38 circumferentially while preserving an overall low coefficient of friction for the bearing 10.

## Claims

1. A high speed ball bearing (10) comprising; an inner annular race (20) having an outer annular ball race groove(26); an outer annular race (12) spaced radially from the inner race (20) and having an inner annular ball race groove (14) confronting the outer groove (26) on the inner race; an annular separator (28) located between the inner and outer races (20,12), the separator (28) having a series of circumferentially spaced apertures (36); and a series of balls (38) captively located between the inner and outer races (20,12), within the outer and inner grooves (26,14) and within the apertures (36) in the separator;
characterised in that the inner and outer races (20,12) are made of bearing quality steel, the balls (38) are made of ceramic material and the separator (28) is made of a material which includes a selected mount of a solid lubricant.

2. A bearing as claimed in Claim 1 characterised in that the ceramic balls (38) are of solid silicon nitride.

3. A bearing as claimed in Claim 1 or Claim 2 characterised in that the solid lubricant is carbon graphite.

4. A bearing as claimed in any preceding claim characterised in that the separator (28) is a polyimide polymer.

5. A bearing as claimed in Claim 4 characterised in that the separator (28) is of Vespel SP-21.

6. A bearing as claimed in any preceding claim characterised in that the separator (28) and the outer race (12) each define an axially spaced apart pair of engageable surfaces (16,18,30,32) which confront in a radially spaced relationship, the confronting surfaces being relatively rotational and engageable with one another upon gyration of the separator (28).

7. A bearing as claimed in claim 6 characterised in that the engageable pair of surfaces (16,18) on the outer race (12) are cylindrical surfaces which are axially spaced apart on opposite sides of the ball race groove (14), and the engageable surfaces (30,32) on the separator are a similarly axially spaced apart radially extending pair of annular protrusions defining an annular groove (34) therebetween, the pair of protrusions each defining the radially outwardly facing engageable surface.

8. A bearing as claimed in any preceding claim characterised in that the radially inner ball race member comprises a mirror image pair of annular members (22,24) which cooperate to define the respective ball race groove (26).

9. A method of operating a bearing (10) as claimed in any of Claims 1 to 8 characterised by operating the bearing (10) at a speed at which the DN number is above $5 \times 10^5$ and by providing a marginally lubricating mist of liquid jet engine fuel in a transporting air steam (40) directed onto the bearing.

10. A method as claimed in Claim 9 characterised in that the liquid jet fuel is JP-4, JP-5, or JP-10

0270344

FIG 1

FIG 2